# EUROPEAN PATENT APPLICATION

(11) **EP 3 715 119 A1**
(43) Date of publication of application: **30.09.2020**
(21) Application number: 19212812.2
(22) Date of filing: 02.12.2019
(51) Int. Cl.: B33Y 70/00, B33Y 70/10, C09D 11/04, C09D 11/10, C09D 11/14, C09D 11/30

(54) **INK FOR 3D PRINTING SYSTEM**

(30) Priority: 25.03.2019 JP 2019057397
(71) Applicant: Osaka University, Suita-shi, Osaka 565-0871 (JP); NAGASUNA MAYU INC., Kyotango-shi, Kyoto 629-3131 (JP)
(72) Inventor: SAKAI, Shinji, Suita-shi, Osaka 565-0871 (JP); YOSHII, Ayano, Suita-shi, Osaka 565-0871 (JP); NAGASUNA, Osamu, Kyotango-shi, Kyoto 629-3131 (JP); HORII, Kazuki, Kyotango-shi, Kyoto 627-0027 (JP)
(74) Representative: Winter, Brandl, Fürniss, Hübner, Röss, Kaiser, Polte - Partnerschaft mbB

(57) **Abstract**

Provided is an ink for a 3D printing system having excellent pseudoplasticity. The ink for a 3D printing system includes: silk nanofibers; and a natural polymer and/or a synthetic polymer.

## Description

### CROSS-REFERENCE TO RELATED APPLICATION

The present application claims priority from Japanese patent application No. 2019-057397 filed on March 25, 2019, the content of which is hereby incorporated by reference into this application.

### BACKGROUND OF THE INVENTION

### 1. Field of the Invention

The present invention relates to an ink for a 3D printing system.

### 2. Description of the Related Art

In recent years, progress has been made in three-dimensional cell culture technologies with a view to application thereof to various fields, such as regenerative medicine. Of those, 3D bioprinting has been attracting attention because of its ability to reproduce a complex tissue.

The 3D bioprinting is a technology to fabricate a three-dimensional gel structural body in which cells are three-dimensionally arranged, that involves ejecting a cell-containing gel material onto a target site to form a layer, fixing the material while gelating the material, and stacking the layers. The 3D bioprinting allows high-precision control of a density and arrangement of the cells using a computer.

There are three maj or types of printing technologies : an inkjet type, a laser beam type, and an extrusion type (V.K. Lee, G. Dai, "Printing of Three-Dimensional Tissue Analogs for Regenerative Medicine", Ann Biomed Eng 45 (1) (2017) 115-131) . Of those, in the extrusion-type 3D printing, a viscosity of an ink serves as an important parameter. When the ink has a low viscosity, the ink is printed onto a base in a liquid state, and hence there is a problem that a shaped object is liable to be deformed, resulting in unstable shaping. In addition, when the ink has a high viscosity, the ink is appropriate for shape retention on a substrate, but there is a problem that a high pressure is required at the time of its ejection from a nozzle, resulting in a reduction in cell survival rate.

### SUMMARY OF THE INVENTION

Therefore, development of an ink for a 3D printing system having excellent so-called pseudoplasticity is desired, the ink having a low viscosity at the time of its ejection from a nozzle and having a high viscosity on a substrate after printing.

An object of the present invention is to provide an ink for a 3D printing system having excellent pseudoplasticity.

The inventors of the present invention have made extensive investigations, and as a result, have found that the above-mentioned object is achieved by an ink for a 3D printing system containing silk nanofibers, and a natural polymer and/or a synthetic polymer. Thus, the inventors have completed the present invention.

That is, the present invention relates to the following ink for a 3D printing system.
1. An ink for a 3D printing system, including: silk nanofibers; and a natural polymer and/or a synthetic polymer.
2. The ink for a 3D printing system according to Item 1, wherein a concentration of the silk nanofibers is 0.1 mass% or more.
3. The ink for a 3D printing system according to Item 1 or 2, wherein the natural polymer and/or the synthetic polymer includes at least one kind selected from the group consisting of: a polysaccharide, a nucleic acid, a carbohydrate, a protein, a polypeptide, a poly (amino acid), polylactic acid, polyethylene oxide, polyethylenimine, polyvinylpyrrolidone, polyethylene glycol, polyacrylic acid, hyaluronic acid, alginic acid, chitosan, polyglutamic acid, albumin, gelatin, dextran, pullulan, carrageenan, collagen, curdlan, carboxymethyl cellulose, methyl cellulose, fucoidan, amylose, amylopectin, pectin, and polyvinyl alcohol; and derivatives thereof.
4. The ink for a 3D printing system according to any one of Items 1 to 3, wherein a concentration of the natural polymer and/or the synthetic polymer is 0.1 mass% or more.
5. The ink for a 3D printing system according to any one of Items 1 to 4, wherein the ink for a 3D printing system has a pH of from 2.0 to 14.0.

An ink for a 3Dprinting system of the present invention exhibits excellent pseudoplasticity by virtue of containing silk nanofibers, and a natural polymer and/or a synthetic polymer.

### BRIEF DESCRIPTION OF THE DRAWINGS

FIG. 1 is a graph for showing the influences of silk nanofibers and hyaluronic acid on the viscosity of a solution with respect to a shear rate.
FIG. 2 is a graph for showing the influences of silk nanofibers and alginic acid on the viscosity of a solution with respect to a shear rate.
FIG. 3 is a graph for showing the influences of silk nanofibers and chitosan on the viscosity of a solution with respect to a shear rate.
FIG. 4 is a graph for showing the influences of silk nanofibers and polyvinyl alcohol on the viscosity of a solution with respect to a shear rate.
FIG. 5 is a graph for showing the influence of the concentration of silk nanofibers on the viscosity of a solution with respect to a shear rate.
FIG. 6 is a graph for showing the influences of silk nanofibers and hyaluronic acid having a phenolic hydroxy group introduced therein on the viscosity of a solution with respect to a shear rate.
FIG. 7 is a graph for showing the influence of the presence or absence of autoclave treatment on the viscosity of a solution with respect to a shear rate.
FIG. 8 is a graph for showing the results of an investigation on gelation time.
FIG. 9 is an image for showing a design for 3D printing of a lattice shape.
FIG. 10 is a photograph for showing a lattice-shaped structural object fabricated using an ink for a 3D printing system.
FIG. 11 is a photograph for showing a lattice-shaped structural object fabricated using an ink for a 3D printing system.
FIG. 12 is a photograph for showing a lattice-shaped structural object fabricated using an ink for a 3D printing system.
FIG. 13 is a photograph for showing a lattice-shaped structural object fabricated using an ink for a 3D printing system.
FIG. 14 is an image for showing a design for 3D printing of a disc shape.
FIG. 15 is a photograph for showing a disc-shaped structural object fabricated using an ink for a 3D printing system.
FIG. 16 is a photograph for showing a disc-shaped structural object fabricated using an ink for a 3D printing system.
FIG. 17 is a photograph for showing a disc-shaped structural object fabricated using an ink for a 3D printing system.
FIG. 18 is a photograph for showing a disc-shaped structural object fabricated using an ink for a 3D printing system.
FIG. 19 is an image for showing a design for 3D printing of a ring 1 shape, a ring 2 shape, and a rectangular parallelepiped.
FIG. 20 is a photograph for showing structural objects of the ring 1 shape, the ring 2 shape, and the rectangular parallelepiped fabricated using an ink for a 3D printing system.

### DETAILED DESCRIPTION OF THE INVENTION

An ink for a 3Dprinting system of the present invention contains silk nanofibers, and a natural polymer and/or a synthetic polymer. The ink for a 3D printing system of the present invention having the above-mentioned configuration contains the silk nanofibers, and hence has a low viscosity at the time of its ejection from a nozzle and has a high viscosity on a substrate after printing, thus exhibiting high pseudoplasticity. In addition, the ink for a 3D printing system of the present invention contains the natural polymer and/or the synthetic polymer, and hence has a high viscosity on a substrate, thereby stabilizing the shaping of a three-dimensional gel structural body formed by 3D printing.

The term "pseudoplasticity" of a material means the following property: when a pressure against the material is increased by shearing or the like, the viscosity of the material lowers to increase its fluidity, and when the pressure is decreased, the viscosity of the material increases to lower its fluidity.

Now, the present invention will be described in detail.

### 1. Ink for 3D Printing System

The ink for a 3D printing system of the present invention contains the silk nanofibers, and the natural polymer and/or the synthetic polymer.

The silk nanofibers are not particularly limited, and fine fibers obtained by the defibration of silk may be used. More specifically, silk nanofibers purified from a natural product, commercially available silk nanofibers, or the like may be used. Silk is mainly formed of two kinds of proteins, i.e., fibroin and sericin. The silk nanofibers to be used in the present invention may contain sericin or may not contain sericin.

The silk nanofibers may be produced by, for example, using silk nanofibers obtained by a method involving performing electrospinning or wet spinning from a solution containing silk.

The average short diameter of the silk nanofibers is preferably 0.01 nm or more, more preferably 0.1 nm or more, still more preferably 1 nm or more, and particularly preferably 5 nm or more. The average short diameter of the silk nanofibers is preferably 500 nm or less, more preferably 300 nm or less, still more preferably 200 nm or less, and particularly preferably 100 nm or less. When the average short diameter of the silk nanofibers is the above-mentioned upper limit or less, the viscosity of the ink for a 3D printing system does not become excessively high, and hence the pressure at the time of its ejection from a nozzle is further reduced. When the average short diameter of the silk nanofibers is the above-mentioned lower limit or more, the pseudoplasticity of the ink for a 3D printing system is further improved.

The concentration of the silk nanofibers in the ink for a 3D printing system is preferably 0.1 mass% or more, more preferably 0.5 mass% or more, still more preferably 0.8 mass% or more. The concentration of the silk nanofibers in the ink for a 3D printing system is preferably 10.0 mass% or less, more preferably 5.0 mass% or less. When the concentration of the silk nanofibers is the above-mentioned upper limit or less, the viscosity of the ink for a 3D printing system does not become excessively high, and hence the pressure at the time of its ejection from a nozzle is further reduced. When the concentration of the silk nanofibers is the above-mentioned lower limit or more, the pseudoplasticity of the ink for a 3D printing system is further improved.

The natural polymer and the synthetic polymer are not particularly limited, and preferred examples thereof include a polysaccharide, a nucleic acid, a carbohydrate, a protein, a polypeptide, a poly (amino acid), polylactic acid, polyethylene oxide, polyethylenimine, polyvinylpyrrolidone, polyethylene glycol, polyacrylic acid, hyaluronic acid, alginic acid, chitosan, polyglutamic acid, albumin, gelatin, dextran, pullulan, carrageenan, collagen, curdlan, carboxymethyl cellulose, methyl cellulose, fucoidan, amylose, amylopectin, pectin, silk fibroin, and polyvinyl alcohol. More preferred examples thereof include a polysaccharide, a nucleic acid, a carbohydrate, a protein, a polypeptide, a poly (amino acid), polylactic acid, polyethylene oxide, polyethylenimine, polyvinylpyrrolidone, polyethylene glycol, polyacrylic acid, hyaluronic acid, alginic acid, chitosan, polyglutamic acid, albumin, gelatin, dextran, pullulan, carrageenan, collagen, curdlan, carboxymethyl cellulose, methyl cellulose, fucoidan, amylose, amylopectin, pectin, and polyvinyl alcohol. In addition, derivatives thereof are not particularly limited, and preferred examples thereof include derivatives each having a cross-linkable functional group introduced therein. Examples of the cross-linkable functional group include a phenolic hydroxy group, a benzophenone group, and a methacryloylgroup. Of those, hyaluronic acid, alginic acid, chitosan, polyvinyl alcohol, gelatin, and derivatives thereof each having a phenolic hydroxy group introduced therein are preferred because the pseudoplasticity of the ink for a 3D printing system is further improved.

The above-mentioned natural polymers or synthetic polymers may be used alone, or a plurality of the above-mentioned natural polymers and/or synthetic polymers may be used by mixing them.

The concentration of the natural polymer or the synthetic polymer in the ink for a 3D printing system is preferably 0.1 mass% or more, more preferably 0.3 mass% or more, still more preferably 1.0 mass% or more, and particularly preferably 2.0 mass% or more. The concentration of the natural polymer or the synthetic polymer in the ink for a 3D printing system is preferably 30.0 mass% or less, more preferably 15.0 mass% or less, and still more preferably 10.0 mass% or less. When the concentration of the natural polymer or the synthetic polymer is the above-mentioned upper limit or less, the pseudoplasticity of the ink for a 3D printing system is further improved. When the concentration of the natural polymer or the synthetic polymer is the above-mentioned lower limit or more, the viscosity of the ink for a 3D printing system does not become excessively high, and hence the pressure at the time of its ejection from a nozzle is further reduced.

When the ink for a 3D printing system contains two or more kinds of natural polymers and synthetic polymers, the above-mentioned concentration means the total concentration of all of the natural polymers and synthetic polymers contained in the ink for a 3D printing system.

The pH of the ink for a 3D printing system of the present invention is preferably from 2.0 to 14.0, more preferably from 3.0 to 12.0, still more preferably from 4.0 to 7.0. When the pH falls within the above-mentioned range, the pseudoplasticity of the ink for a 3D printing system is further improved.

The ink for a 3D printing system of the present invention may contain other components in addition to the silk nanofibers, and the natural polymer and/or the synthetic polymer. Examples of such other components include one or more selected from the group consisting of an enzyme that catalyzes a reaction to form cross-links between molecules, a photopolymerization initiator, and a photosensitizer.

The enzyme that catalyzes a reaction to form cross-links between molecules is not particularly limited, and examples thereof include one or more selected from the group consisting of horseradish peroxidase (HRP), a transglutaminase, and a tyrosinase. Of those, horseradish peroxidase is preferred because the gelation time of the ink for a 3D printing system after its ejection is further shortened.

The content of the HRP enzyme in the ink for a 3D printing system is preferably from 0. 1 U/ml to 10, 000 U/ml, more preferably from 0.5 U/ml to 2, 000 U/ml, and still more preferably from 1 U/ml to 500 U/ml. When the content of the HRP enzyme is the above-mentioned upper limit or less, the gelation time of the ink for a 3D printing system is further shortened without excessive addition of the HRP enzyme. When the content of the HRP enzyme is the above-mentioned lower limit or more, the gelation time of the ink for a 3D printing system is further shortened.

The ink for a 3D printing system of the present invention has excellent pseudoplasticity, and hence is suitably used as an ink to be used for a 3D printing system.

### 2. Method of Producing Ink for 3D Printing System

As a method of producing the ink for a 3D printing system of the present invention, there is given a production method including a step of preparing a silk nanofiber dispersion.

A method of preparing the silk nanofiber dispersion is not particularly limited, and an example thereof is a preparation method involving adding and dispersing the silk nanofibers into a solvent. The addition and/or the dispersion of the silk nanofibers may be performed by a hitherto known method.

The solvent is not particularly limited as long as the silk nanofibers are dispersed therein, and examples thereof include one or more selected from the group consisting of water, an aqueous solution adjusted to be approximately isotonic with a body fluid, and a mixture of water and an organic solvent. Of those, water is preferred because of it is excellent from a safety viewpoint. That is, an aqueous dispersion of the silk nanofibers is preferably used as the silk nanofiber dispersion. In addition, an aqueous solution adjusted to be approximately isotonic with a body fluid is preferred because the animal cell survivability of the ink for a 3D printing system of the present invention is further improved.

The pH of the silk nanofiber dispersion is preferably from 2.0 to 14.0, more preferably from 3.0 to 12.0, still more preferably from 4.0 to 8.0. When the pH falls within the above-mentioned range, the pseudoplasticity of the ink for a 3D printing system is further improved.

The concentration of the silk nanofibers in the silk nanofiber dispersion is preferably 0.1 mass% or more, and more preferably 0.5 mass% or more. The concentration of the silk nanofibers in the silk nanofiber dispersion is preferably 10.0 mass% or less, and more preferably 5.0 mass% or less. When the concentration of the silk nanofibers in the silk nanofiber dispersion is the above-mentioned upper limit or less, the viscosity of the ink for a 3D printing system does not become excessively high, and hence the pressure at the time of its ejection from a nozzle is further reduced. When the concentration of the silk nanofibers in the silk nanofiber dispersion is the above-mentioned lower limit or more, the pseudoplasticity of the ink for a 3D printing system is further improved.

The production method for the ink for a 3D printing system of the present invention preferably further includes a step of mixing the silk nanofiber dispersion with a natural polymer and/or a synthetic polymer. As the natural polymer or the synthetic polymer, the above-mentioned natural polymer or synthetic polymer may be used. The natural polymer and/or the synthetic polymer may be dissolved in the silk nanofiber dispersion, or the natural polymer and/or the synthetic polymer may be dissolved in an appropriate solvent to provide a polymer solution containing the natural polymer and/or the synthetic polymer, followed by mixing thereof with the silk nanofiber dispersion.

When the natural polymer and/or the synthetic polymer is dissolved in the appropriate solvent, the solvent is not particularly limited as long as the natural polymer and/or the synthetic polymer is dissolved therein. The examples of the solvent include one or more selected from the group consisting of water, phosphate buffered saline (PBS), and a mixture of water and an organic solvent. The organic solvent is not particularly limited, and examples thereof include one or more selected from the group consisting of ethanol, glycerin, and dimethyl sulfoxide. The pH of the polymer solution containing the natural polymer and/or the synthetic polymer is preferably from 2.0 to 14.0, more preferably from 3.0 to 12.0, still more preferably from 5.0 to 8.0. When the pH falls within the above-mentioned range, the pseudoplasticity of the ink for a 3D printing system is further improved.

The concentration of the natural polymer and/or the synthetic polymer in the polymer solution is preferably 0.1 mass% or more, more preferably 0.3 mass% or more, still more preferably 1.0 mass% or more, particularly preferably 2.0 mass% or more. The concentration of the natural polymer and/or the synthetic polymer in the polymer solution is preferably 30.0 mass% or less, more preferably 15.0 mass% or less, still more preferably 10.0 mass% or less. When the concentration of the natural polymer and/or the synthetic polymer in the polymer solution is the above-mentioned upper limit or less, the pseudoplasticity of the ink for a 3D printing system is further improved. When the concentration of the natural polymer and/or the synthetic polymer in the polymer solution is the above-mentioned lower limit or more, the viscosity of the ink for a 3D printing system does not become excessively high, and hence the pressure at the time of its ejection from a nozzle is further reduced.

### Examples

The present invention will be specifically described below by way of Examples. However, the present invention is not limited to these Examples. In figures and tables, silk nanofibers, hyaluronic acid, alginic acid, chitosan, polyvinyl alcohol, hyaluronic acid having a phenolic hydroxy group introduced therein, and cellulose nanofibers maybe referred to as SNF, HA, Alg, Chitosan, PVA, HA-Ph, and CNF, respectively.

### Test Example 1 (Influences of Silk Nanofibers and Natural Polymer or Synthetic Polymer on Viscosity of Solution with respect to Shear Rate)

Silk nanofibers, manufactured by Nagasuna Mayu Inc. in Japan, were mixed with a phosphate buffered saline (PBS) solution, and the mixture was thoroughly stirred to prepare a silk nanofiber dispersion containing the silk nanofibers at a concentration of 1.0 mass%.

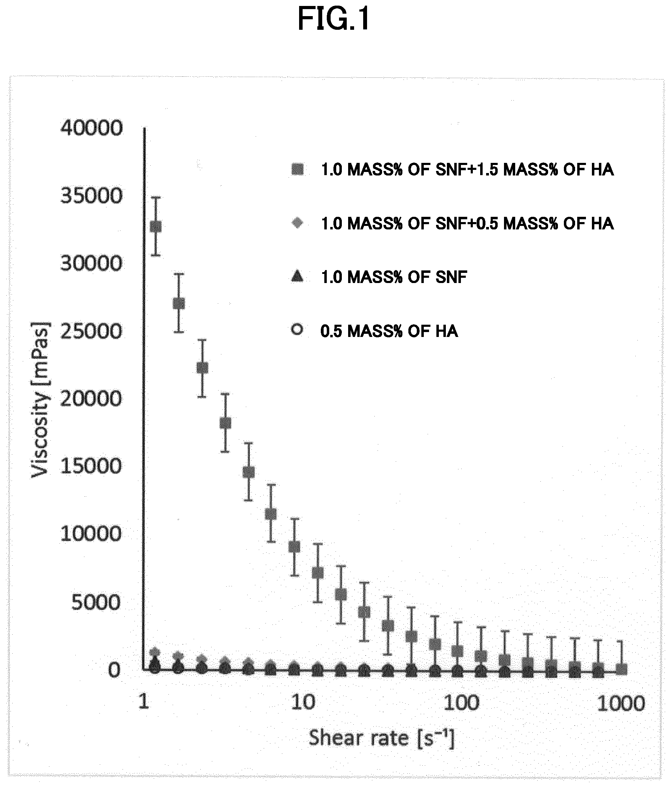

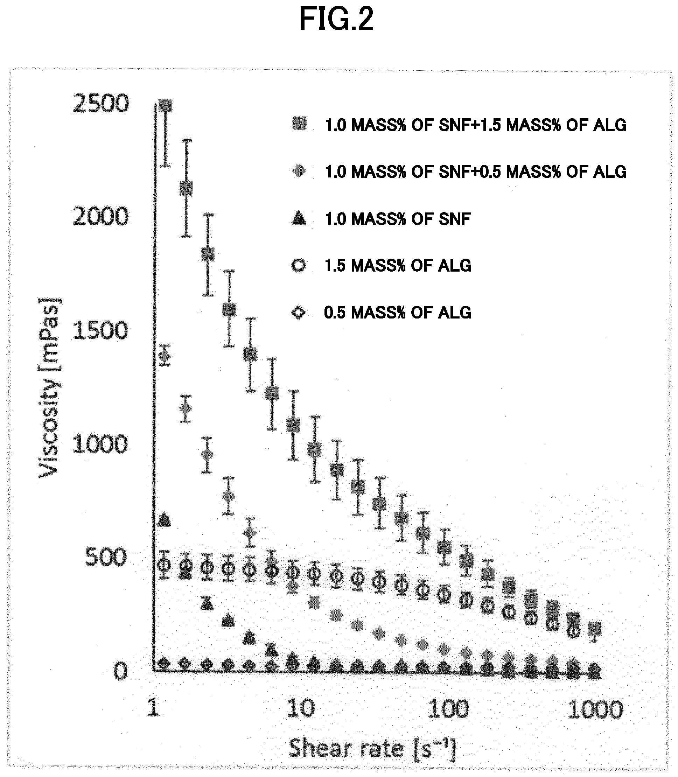

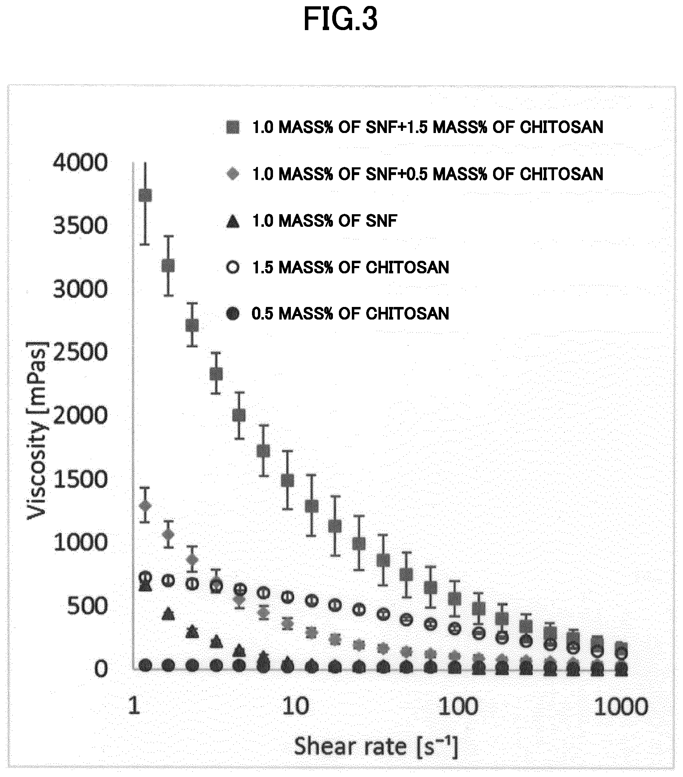

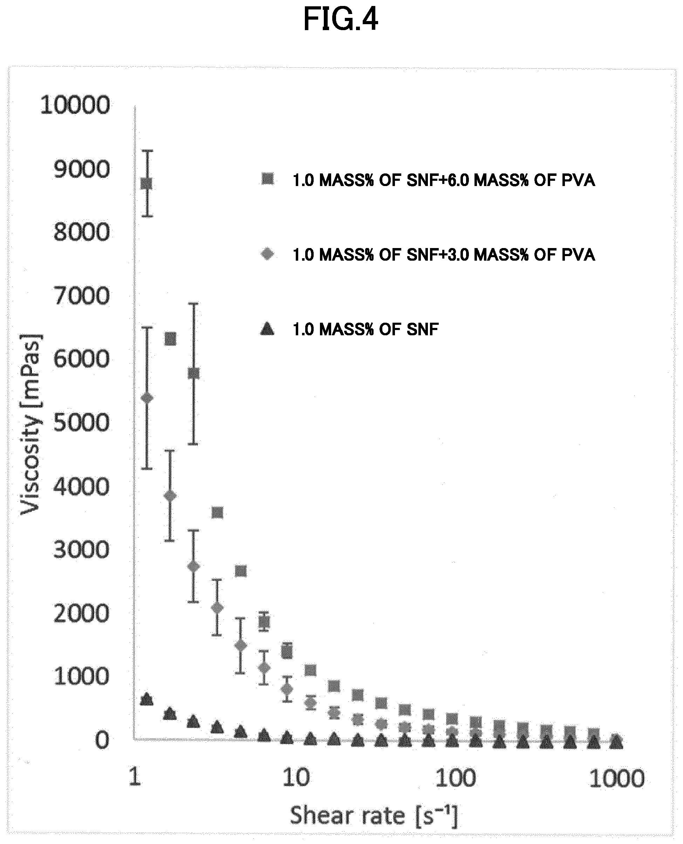

Solutions of hyaluronic acid (FIG. 1: Example 1 (1.5 mass%) and Example 2 (0.5 mass%)), solutions of alginic acid (FIG. 2: Example 3 (1.5 mass%) and Example 4 (0.5 mass%)), solutions of chitosan (FIG. 3: Example 5 (1.5 mass%) and Example 6 (0.5 mass%)), and solutions of polyvinyl alcohol (FIG. 4: Example 7 (6.0 mass%) and Example 8 (3.0 mass%)) were each prepared using PBS as a solvent. The above-mentioned solutions were mixed with a silk nanofiber dispersion prepared using PBS as a solvent, and the mixtures were thoroughly stirred to prepare the solutions having final concentrations shown in FIG. 1 to FIG. 4.

Then, the viscosity of each solution was measured with a disc rheometer using 800 µl of the solution per time (n=3) . Measurement conditions were set to a gap of 500 µm, a shear rate of from 1 S⁻¹ to 1,000 S⁻¹, and a measurement temperature of 37°C. Since chitosan dissolves only under acidic conditions, chitosan was dissolved by adjusting the pH of the solution to the vicinity of from 4.6 to 4.8 using HCl. Polyvinyl alcohol was dissolved under heating in an oil bath set to 80.0°C.

By the above-mentioned methods, a solution of Example 1 (1.0 mass% of SNF+1.5 mass% of HA in FIG. 1), a solution of Example 2 (1.0 mass% of SNF+0. 5 mass% of HA in FIG. 1), a solution of Example 3 (1.0 mass% of SNF+1.5 mass% of Alg in FIG. 2), a solution of Example 4 (1.0 mass% of SNF+0.5 mass% of Alg in FIG. 2), a solution of Example 5 (1.0 mass% of SNF+1.5 mass% of Chitosan in FIG. 3), a solution of Example 6 (1.0 mass% of SNF+0.5 mass% of Chitosan in FIG. 3), a solution of Example 7 (1.0 mass% of SNF+6.0 mass% of PVA in FIG. 4), and a solution of Example 8 (1.0 mass% of SNF+3.0 mass% of PVA in FIG. 4) were prepared. The viscosity of the each solution was then measured.

In addition, as Comparative Examples, a solution of hyaluronic acid (FIG. 1: Comparative Example 1 (0.5 mass% of HA)), solutions of alginic acid (FIG. 2: Comparative Example 2 (1.5 mass% of Alg) and Comparative Example 3 (0.5 mass% of Alg)), and solutions of chitosan (FIG. 3: Comparative Example 4 (1.5 mass% of Chitosan) and Comparative Example 5 (0.5 mass% of Chitosan) were each prepared using PBS as a solvent. The viscosity of each solution was then measured under the same conditions as those of Test Example 1. In FIG. 1 to FIG. 4, measurement results of the viscosity of Comparative Example 6 (1.0 mass% of SNF) are shown.

### <Results>

It was found that the solutions containing the silk nanofibers and the natural polymer or the synthetic polymer exhibited an extremely high viscosity at rest compared to those containing the silk nanofibers alone or the polymer alone. However, the viscosity of the solutions containing the silk nanofibers and the natural polymer or the synthetic polymer was significantly decreased along with an increase in shear rate (FIG. 1 to FIG. 4) . In the case where an ink for a 3D printing system containing the silk nanofibers and the natural polymer and/or the synthetic polymer is used, at a time when the ink is ejected from a nozzle, the viscosity of the ink is lowered in the nozzle, and hence the ink can be extruded with a low pressure . Therefore, a load on cells in the ink and a disturbance in printing due to clogging can be suppressed. On the other hand, it is considered that a shaped object fabricated using the ink containing the silk nanofibers and the natural polymer and/or the synthetic polymer is stabilized because the viscosity of the ink is restored after the ejection. It was found from the above-mentioned results that the pseudoplasticity of the ink was improved by combining the silk nanofibers with the natural polymer and/or the synthetic polymer.

### Test Example 2 (Influences of Concentration of Silk Nanofibers in Solution containing Silk Nanofibers and Alginic Acid on Viscosity of Solution with respect to Shear Rate)

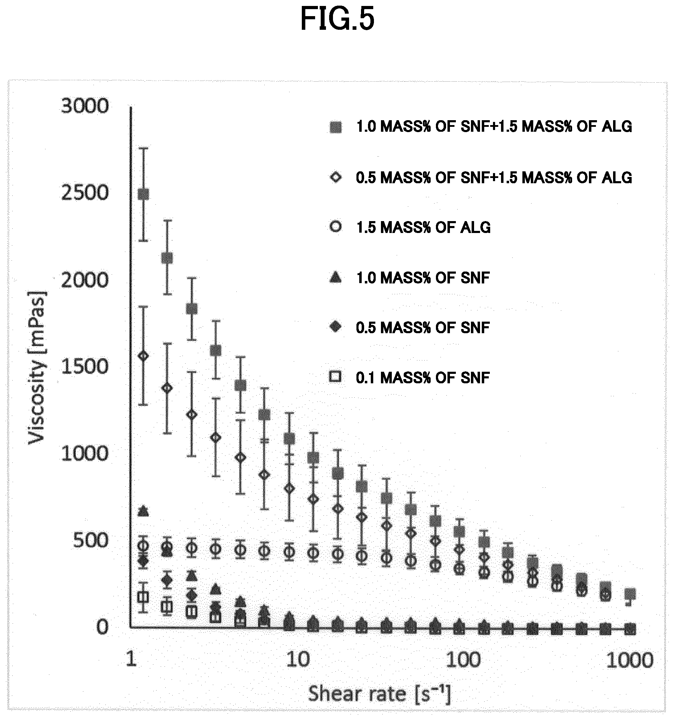

In the same manner as in Test Example 1, the solutions containing a silk nanofiber and an alginic acid at the final concentrations shown in FIG. 5 were prepared by mixing a silk nanofiber dispersion and an alginic acid aqueous solution each prepared using PBS as a solvent and by stirring the mixtures thoroughly. The viscosity of each solution was then measured under the same conditions as those of Test Example 1.

By the above-mentioned methods, a solution of Example 9 (FIG. 5: 1.0 mass% of SNF+1.5 mass% of Alg) and a solution of Example 10 (FIG. 5: 0.5 mass% of SNF+1.5 mass% of Alg) were prepared. The viscosity of each solution was then measured under the same conditions as those of Test Example 1.

In addition, as Comparative Examples, a solution of alginic acid (FIG. 5: Comparative Example 7 (1.5 mass% of Alg)) and solutions of silk nanofibers (FIG. 5: Comparative Example 8 (1.0 mass% of SNF), Comparative Example 9 (0.5 mass% of SNF), and Comparative Example 10 (0.1 mass% of SNF)) were each prepared using PBS as a solvent. The viscosity of each solution was then measured under the same conditions as those of Test Example 1.

### <Results>

It was found that in the case where the concentration of the silk nanofibers was 1.0 mass% or 0.5 mass%, the solutions containing the combination of the silk nanofibers and alginic acid exhibited an extremely high viscosity at rest compared to the case of the silk nanofibers alone or alginic acid alone, but the viscosity of the solutions was significantly decreased along with an increase in shear rate. That is, the solutions containing the silk nanofibers and alginic acid exhibited pseudoplasticity (FIG. 5).

### Test Example 3 (Influences of Silk Nanofibers and Hyaluronic Acid having Phenolic Hydroxy Group introduced therein on Viscosity of Solution with respect to Shear Rate)

A phenolic hydroxy group was introduced into hyaluronic acid in accordance with the following procedure . A0.1 MMES buffer having a pH of 6.0 was prepared, and sodiumhyaluronate was dissolved therein. Further, WSCD·HCl, N-hydroxysuccinimide (NHS), and tyramine hydrochloride each dissolved in a small amount of Milli-Q water were mixed, and the mixture was stirred for 24 hours. The pH was adjusted to 8. 6 with NaOH to stop the reaction. The reaction solution was added to a sufficient amount of acetone to precipitate hyaluronic acid having a phenolic hydroxy group (HA-Ph) introduced therein. The precipitated HA-Ph was washed with 80% ethanol. This operation was performed until the disappearance of a peak at around 275 nm indicating the presence of tyramine in the measurement of the absorbance of the ethanol solution after the washing. After dehydration with 100% ethanol, the resultant HA-Ph was vacuum-dried to remove ethanol, and stored at 4°C. Reaction composition is shown in Table 1 below.

**Table 1**

| Reagent name | Concentration with respect to 1.0 L of MES |
|---|---|
| Sodium hyaluronate | 7.5 g |
| Tyramine hydrochloride | 27.4 g |
| NHS | 7.6 g |
| WSCD·HCl | 6.4 g |

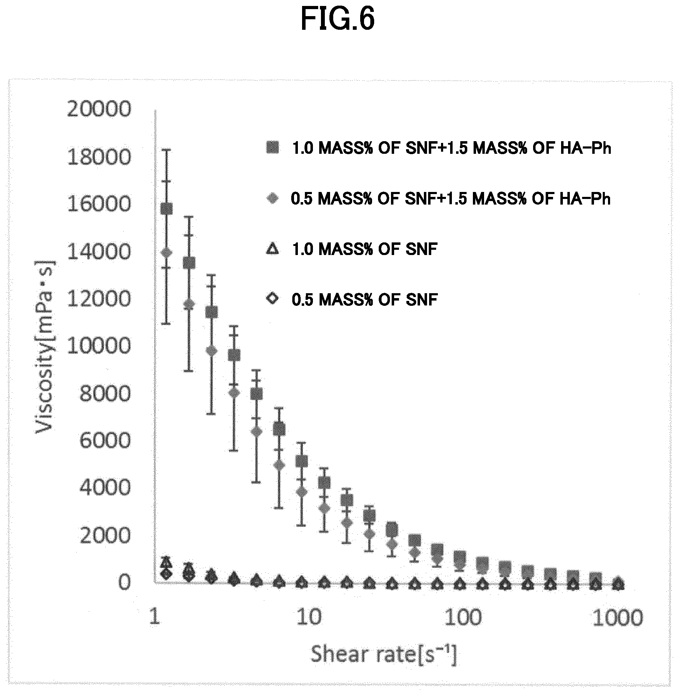

The HA-Ph prepared in the foregoing and a silk nanofiber dispersion prepared using PBS as a solvent were mixed, and the mixtures were thoroughly stirred to prepare solutions containing the HA-Ph and the silk nanofibers at final concentrations shown in FIG. 6. The viscosity of each solution was then measured under the same conditions as those of Test Example 1.

By the above-mentioned methods, a solution of Example 11 (FIG. 6: 1.0 mass% of SNF+1.5 mass% of HA-Ph) and a solution of Example 12 (FIG. 6: 0.5 mass% of SNF+1.5 mass% of HA-Ph) were prepared. The viscosity of each solution was then measured under the same conditions as those of Test Example 1.

In addition, as Comparative Examples, solutions of silk nanofibers (FIG. 6: Comparative Example 11 (1.0 mass% of SNF) and Comparative Example 12 (0.5 mass% of SNF)) were each prepared using PBS as a solvent. The viscosity of each solution was then measured under the same conditions as those of Test Example 1.

### <Results>

It was found that, the solutions containing the combination of the silk nano fibers and HA-Ph exhibited an extremely high viscosity at rest compared to the case of the silk nanofibers alone, but the viscosity of the solution was significantly decreased along with an increase in shear rate (FIG. 6). It was found from the results that the pseudoplasticity of the solution was improved by combining the silk nanofibers with the natural polymer or synthetic polymer having a phenolic hydroxy group introduced therein.

### Test Example 4 (Influence of Presence or Absence of Autoclave Treatment on Viscosity of Solution with respect to Shear Rate)

In order to apply a nanofiber solution to bioprinting, sterilization treatment needs to be performed. In general, the nanofiber solution loses dispersibility through the occurrence of the formation of an aggregate in the process of drying, and besides, the nanofibers after drying are difficult to redisperse in a solvent. For this reason, ethanol sterilization involving drying treatment once cannot be applied. Therefore, in this test, the influence of heat sterilization with an autoclave on silk nanofibers was confirmed.

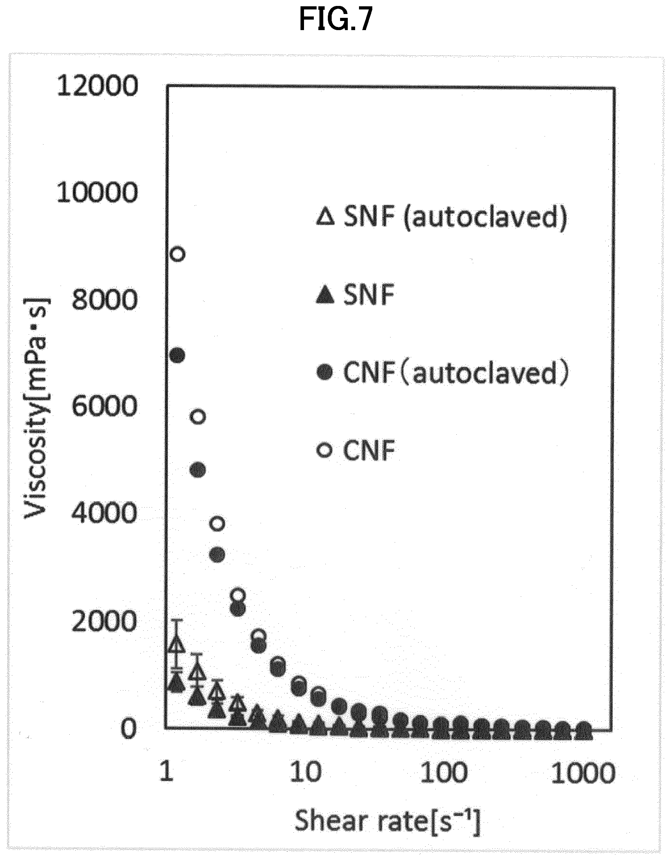

A solution containing silk nanofibers at a concentration of 1.0 mass% was prepared by mixing the silk nanofiber with a PBS solution and stirring thoroughly the mixture. The viscosity of the solution was then measured under the same conditions as those of Test Example 1 (Reference Example 1, FIG. 7: SNF). In addition, the solution containing silk nanofibers held in a screw-capped vial was heated in an autoclave at 121°C for 20 minutes. The viscosity of the autoclaved solution was then measured under the same conditions as those of Test Example 1 (Reference Example 2, FIG. 7: SNF (autoclaved)).

In addition, in the same manner as above except for using cellulose nanofibers in place of the silk nanofibers, the viscosity of a solution containing the cellulose nanofibers was measured (Comparative Reference Example 1, FIG. 7: CNF). In addition, the viscosity of a solution containing the cellulose nanofibers prepared through the autoclave treatment was also measured (Comparative Reference Example 2, FIG. 7: CNF (autoclaved)).

### <Results>

It was found that the autoclave treatment significantly increased the viscosity of the solution containing the cellulose nanofibers compared to the solution containing the silk nanofibers (FIG. 7). In view of the results, the silk nanofibers seemed to be a material showing little alteration after heating. Accordingly, the silk nanofibers may be subjected to heat sterilization treatment with an autoclave, and hence are considered to be a useful bioink material that serve as an alternative to the cellulose nanofibers which have often been used in bioink heretofore.

### Test Example 5 (Investigation on Gelation Time)

When a period of time until an ink for a 3D printing system gelates after its ejection (gelation time) is long, it is considered that the ink for a 3D printing system runs down to reduce shaping precision. In this test, an influence of an enzymatic reaction of horseradish peroxidase (HRP), as means for promoting gelation, on the gelation time was confirmed.

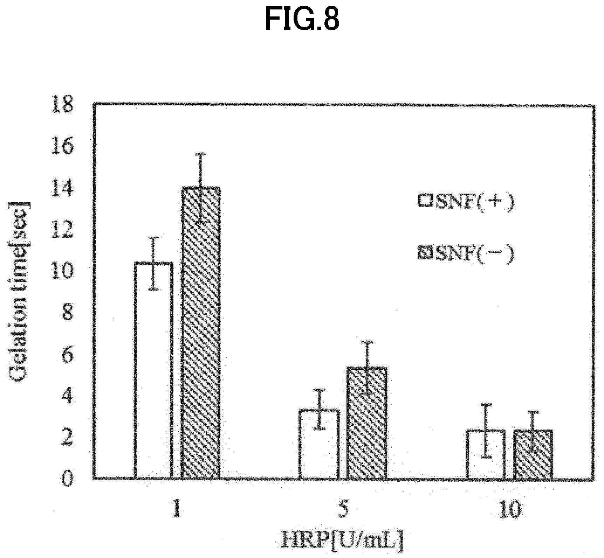

A dispersion of silk nanofibers, a solution of hyaluronic acid having a phenolic hydroxy group (HA-Ph) introduced therein, and a solution of HRP were prepared respectively using PBS as a solvent. Then, the dispersion and the solutions were mixed with each other so as to have concentrations shown in Table 2, and the mixtures were thoroughly stirred to prepare samples of Example 13 (FIG. 8: SNF(+), HRP: 1 U/mL), Example 14 (FIG. 8: SNF(+), HRP: 5 U/mL), Example 15 (FIG. 8: SNF(+), HRP: 10 U/mL), Comparative Example 11 (FIG. 8: SNF(-), HRP: 1 U/mL), Comparative Example 12 (FIG. 8: SNF(-), HRP: 5 U/mL), and Comparative Example 13 (FIG. 8: SNF(-), HRP: 10 U/mL) . 400 µL of each sample prepared by the method described above was placed in a 24-well plate. Then, air delivered from a pump was allowed to pass through a 1 M hydrogen peroxide solution to generate a hydrogen peroxide vapor, and each of the samples was exposed to the vapor in a stirred state. The gelation time of each sample was measured on the assumption that the swelling of the sample indicated that its gelation had occurred. The hydrogen peroxide concentration in the vapor was 14 ppm. The measurement was performed three times, and an average value was obtained by calculation as a measured value . The results are shown in FIG. 8.

**Table 2**

| | SNF [%] | HA-Ph [%] | HRP [U/ml] |
|---|---|---|---|
| Example 13 | 1.0 | 1.5 | 1.0 |
| Example 14 | 1.0 | 1.5 | 5.0 |
| Example 15 | 1.0 | 1.5 | 10.0 |
| Comparative Example 13 | - | 1.5 | 1.0 |
| Comparative Example 14 | - | 1.5 | 5.0 |
| Comparative Example 15 | - | 1.5 | 10.0 |

### <Results>

It was found from FIG. 8 that the gelation time depended on the HRP concentration. In addition, by comparing Example 13 to Examples 14 and 15, it was found that, when the HRP concentration was set to 5 U/mL or 10 U/mL, the gelation time was markedly shortened compared to the case where the gelation time was set to 1.0 U/mL. In addition, by comparing Example 14 to Example 15, it was found that there was no significant difference in gelation time between the case where the HRP concentration was 5 U/mL and the case where the HRP concentration was 10 U/mL. In addition, by comparing Examples 13 to 15 and Comparative Examples 13 to 15, it was found that the samples containing the silk nanofibers had shorter gelation times, and this tendency was particularly remarkable when the HRP concentration was low.

### Test Example 6 (3D Printing using Ink for 3D Printing System)

Structural objects were fabricated using inks for a 3D printing system to test printing stability (shaping precision).

Hyaluronic acid having a phenolic hydroxy group (HA-Ph) introduced therein, a silk nanofiber aqueous dispersion, and horseradish-derived peroxidase (HRP) were dissolved in PBS so as to give the following compositions.

### [Example 16] (SNF(+)): HA-Ph (1.5%), silk nanofibers (1.0%), and HRP (5 U/mL)

### [Comparative Example 16] (SNF(-)): HA-Ph (1.5%) and HRP (5 U/mL)

A hydrogen peroxide vapor was generated by allowing air delivered from a pump to pass through a 1M hydrogen peroxide solution. 3D printing of lattice, disc, ring, and rectangular parallelepiped shapes was then performed on the basis of the following printing conditions, using the ink for a 3D printing system having the compositions of Example 16 or Comparative Example 16, while the ink was exposed to the vapor.

### (Conditions)

Needle inner diameter: 0.22 mm, nozzle moving speed: 21.9 mm/s, thickness of one layer: 0.1 mm, fiber width: 0.22 mm, ink ejection speed: 3.00 ml/hr, linear velocity: 21.9 mm/s, concentration of hydrogen peroxide in vapor: 14 ppm

### (Shapes of Structural Objects)

Lattice: 20 mm on a side, height: 2.0 mm
Disc: diameter: 15 mm, thickness: 3.0 mm
Ring 1: outer short diameter: 10 mm, outer long diameter: 60 mm, inner short diameter: 6 mm, inner long diameter: 40 mm
Ring 2: outer short side: 10 mm, outer long side: 60 mm, inner short diameter: 2 mm, inner long diameter: 40 mm
Rectangular parallelepiped: long side: 35 mm, short side: 10 mm

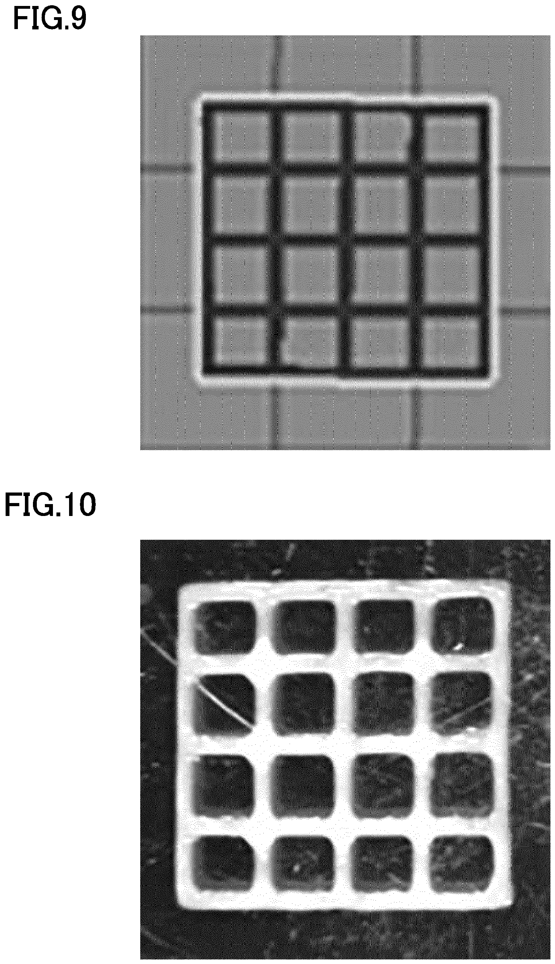

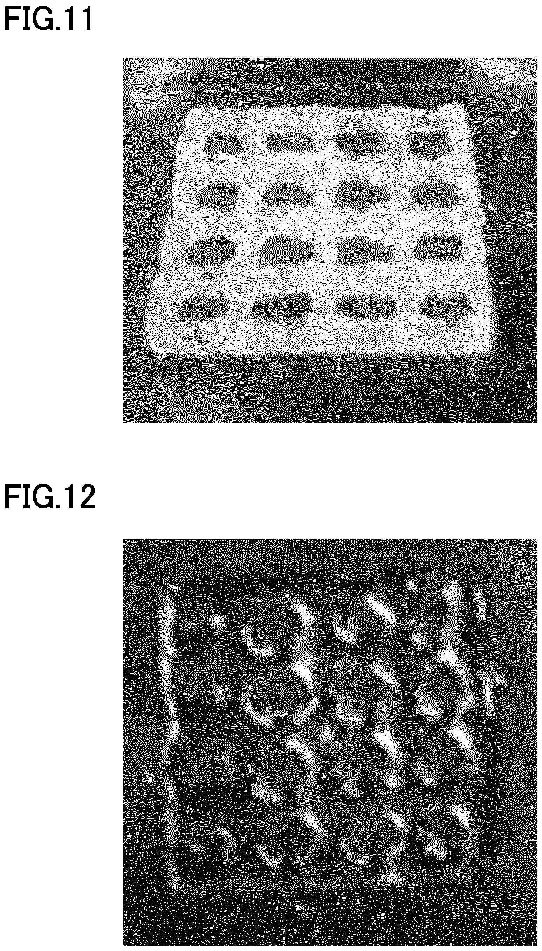

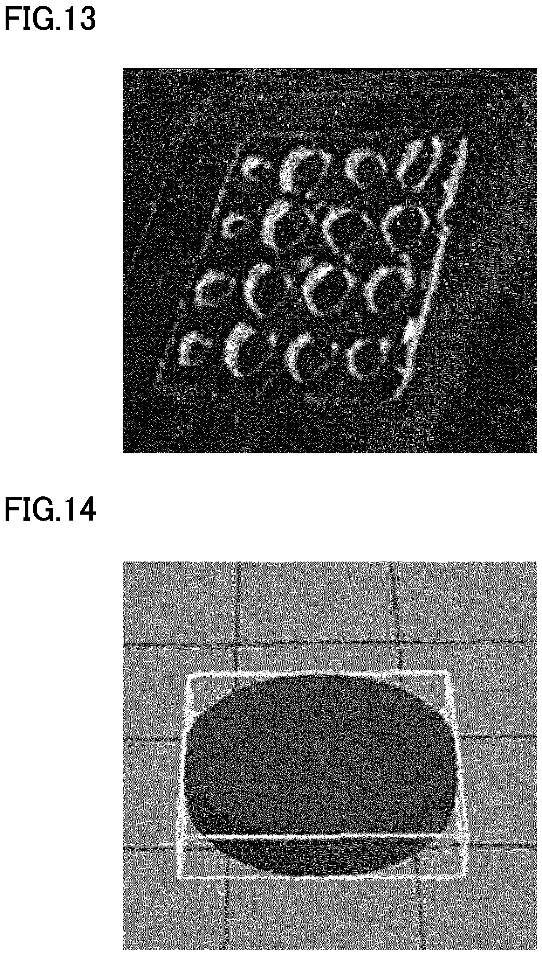

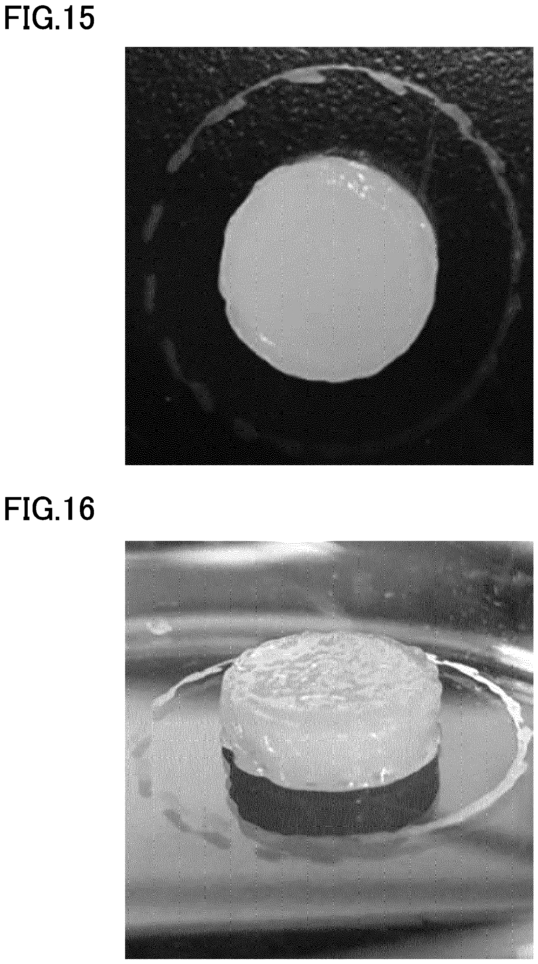

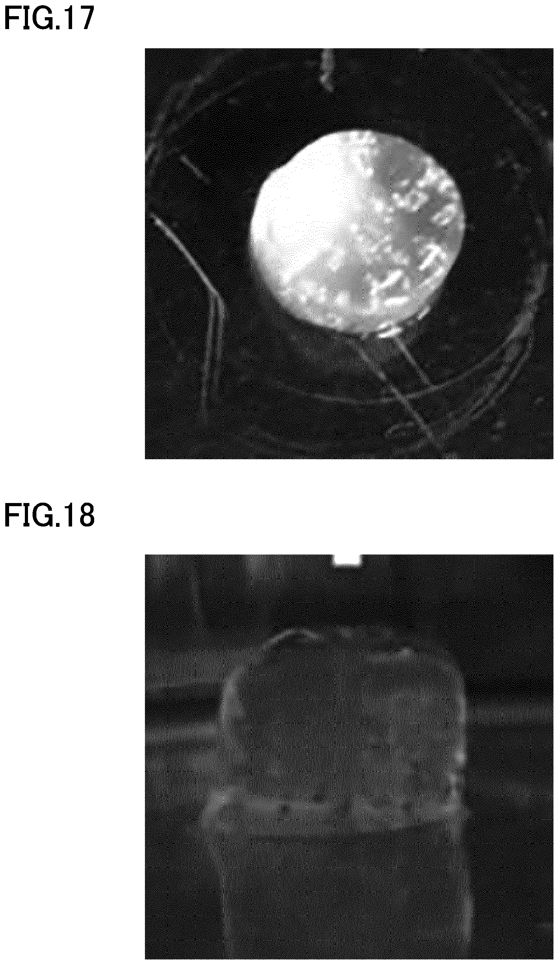

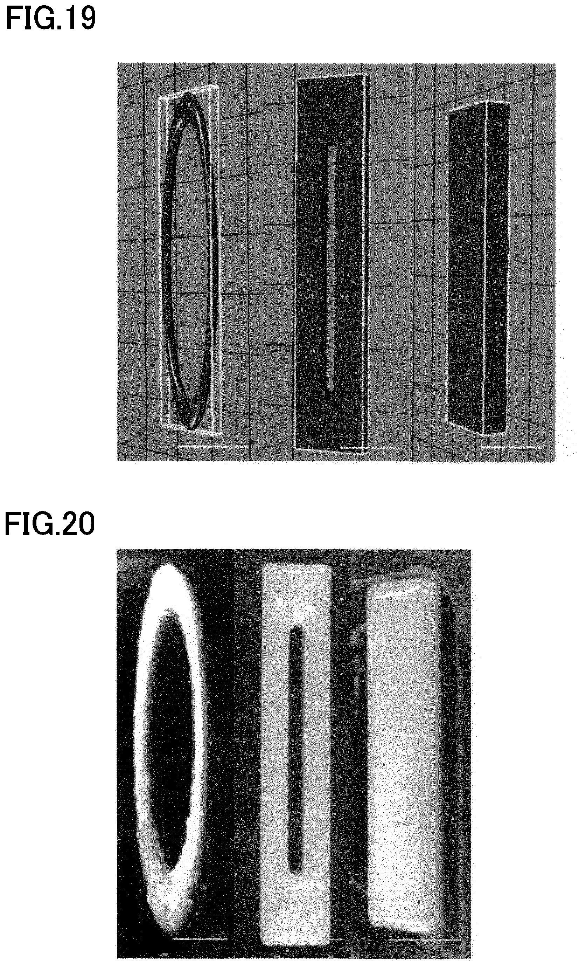

The results are shown in the following figures.
[Lattice] Design (FIG. 9); Example 16 (FIG. 10 and FIG. 11); Comparative Example 14 (FIG. 12 and FIG. 13)
[Disc] Design (FIG. 14) ; Example 16 (FIG. 15 and FIG. 16) ; Comparative Example 14 (FIG. 17 and FIG. 18)
[Ring 1, Ring 2, and Rectangular parallelepiped] Design (FIG. 19) ; Example 16 (FIG. 20)

### <Results>

The shapes of the gel structural objects fabricated with the ink of Comparative Example 16 containing no silk nanofibers were distorted compared to the shapes of the gel structural objects fabricated with the ink of Example 16 containing the silk nanofibers . It was found from the results of FIG. 12 and FIG. 13 that, in the lattice-shaped gel structural object fabricated with the ink of Comparative Example 16, the solution spread after ejection so that the mesh portion was crushed. It was found from the results of FIG. 17 and FIG. 18 that the disc-shaped gel structural object fabricated with the ink of Comparative Example 16 had a thick structure, and hence printing became unstable along with an increase in distance from a dish serving as a base. Consequently, the upper surface of the disc was not flat but rounded. This was presumably because a gel adhered to the tip of the needle at the time of the ejection of the ink and the fabricated gel was dragged by the gel adhered to the tip of the needle. Meanwhile, it was found from the results of FIG. 10, FIG. 11, FIG. 15, FIG. 16, and FIG. 20 that the shapes of the gel structural objects fabricated with the ink of Example 16 containing the silk nanofibers were stable.

## Claims

1. An ink for a 3D printing system, comprising:
silk nanofibers; and
a natural polymer and/or a synthetic polymer.

2. The ink for a 3D printing system according to claim 1, wherein a concentration of the silk nanofibers is 0.1 mass% or more.

3. The ink for a 3D printing system according to claim 1 or 2, wherein the natural polymer and/or the synthetic polymer comprises at least one kind selected from the group consisting of: a polysaccharide, a nucleic acid, a carbohydrate, a protein, a polypeptide, a poly (amino acid), polylactic acid, polyethylene oxide, polyethylenimine, polyvinylpyrrolidone, polyethylene glycol, polyacrylic acid, hyaluronic acid, alginic acid, chitosan, polyglutamic acid, albumin, gelatin, dextran, pullulan, carrageenan, collagen, curdlan, carboxymethyl cellulose, methyl cellulose, fucoidan, amylose, amylopectin, pectin, and polyvinyl alcohol; and derivatives thereof.

4. The ink for a 3D printing system according to any one of claims 1 to 3, wherein a concentration of the natural polymer and/or the synthetic polymer is 0.1 mass% or more.

5. The ink for a 3D printing system according to any one of claims 1 to 4, wherein the ink for a 3D printing system has a pH of from 2.0 to 14.0.
